# EUROPEAN PATENT APPLICATION

(11) **EP 4 160 841 A1**
(43) Date of publication of application: **05.04.2023**
(21) Application number: 22199113.6
(22) Date of filing: 30.09.2022
(51) Int. Cl.: H02H 3/00, H01L 27/092, H02H 5/00, H02H 3/087

(54) **DYNAMIC LATCH-UP PROTECTION**

(30) Priority: 30.09.2021 LU 102862
(71) Applicant: OroraTech GmbH, 81669 München (DE)
(72) Inventor: TREUTINGER, Tim, 84144 Geisenhausen (DE); AMANN, Rupert, 81541 München (DE)
(74) Representative: MERH-IP Matias Erny Reichl Hoffmann Patentanwälte PartG mbB

(57) **Abstract**

This application relates to a method for protecting an electronic device (10) from damage due to a Single Event Latch-Up, SEL. The method comprises a determination (S101) of an operation state of the electronic device. Further, an input current to the electronic device is sensed (S102) and a current threshold is set (S103) based on the determined operation state of the electronic device (10). The current threshold is a threshold for detecting the SEL in the electronic device. Further, the sensed input current is compared (S104) to the current threshold, for determining whether to interrupt (S105) current supply to the electronic device.

## Description

### Technical Field

This disclosure generally relates to methods and devices for protecting circuits from Latch-Up. In particular, the disclosure relates to the protection of electronic devices in satellites (e.g., nanosatellites, such as Cubesats) and other spacecraft from Single Event Latch-Up (SEL).

### Background

A latch-up in general is an inadvertent creation of a low-impedance path between the power supply rails of semiconductor devices, triggering a parasitic structure. This may lead to destruction of the device due to overcurrent.

An SEL in particular can be caused by heavy ions or protons from cosmic rays or solar flares. The SEL is characterized by a parasitic bipolar transistor of the semiconductor device being conductive due to impact of the heavy ions or protons. As a consequence, large currents may flow through the semiconductor device, which may lead to heat building up in the electronic device, potentially affecting the functionality of the device and in the worst-case resulting in permanent destruction of the electronic device.

Protection from such an event is particularly relevant for electronic devices operated in space, such as satellites or spacecrafts and the like.

To protect an electronic device in space from damage due to an SEL, one approach may be to protect the electronic device by passive shielding. Passive shielding is typically used in spacecraft to protect electronic devices and humans from the cosmic rays. The usage of passive shielding for satellites and especially nanosatellites (e.g., Cubesats) however may not be feasible, due to weight limitations and costs.

A different method to protect electronic devices from damage due to an SEL is the detection of such an event and the cycling of the power supply of the electronic device. To detect the SEL, the current supply of the electronic device is monitored. To this end, a current threshold may be determined in advance and the power may be cut off from the electronic device if the current supply exceeds this current threshold. To avoid interference with normal operation, the current threshold has to be higher than the maximum input current expected during normal operation of the electronic device. This may require a trade-off between the ability to protect the electronic device from damage on the one hand, and non-interference with normal operation of the electronic device.

Thus, there is a need for methods and devices for improved SEL detection and protection.

### Summary

In view of some or all of these needs, the present disclosure proposes a method for protecting an electronic device from damage due to an SEL, as well as a system and apparatus implementing this method, having the features of the respective independent claims.

An aspect of the disclosure relates to a method for protecting an electronic device from damage due to an SEL. The electronic device may be one of a processor, a microcontroller, a memory, an FPGA, a graphics board, and a system thereof, for example. The method may include a determination of an operation state of the electronic device. The operation state may relate to one of a boot operation mode, an idle operation mode, a low-performance mode, and a high-performance mode, for example. Further, an input current to the electronic device may be sensed. Further, a current threshold may be set based on the determined operation state of the electronic device. The sensing of the input current may be performed by continuously measuring the input current. The current threshold may be a threshold for detecting the SEL in the electronic device. Yet further, the sensed input current may be compared to the current threshold, for determining whether to interrupt current supply to the electronic device.

By dynamically adapting the current threshold, improved limitation of the current in case of an SEL can be achieved compared to a static current threshold. Further, an SEL leading to a current below the maximum input current of the electronic device can be detected as well, thus extending the current range for SEL protection. On the other hand, dynamic adaptation of the current threshold allows minimizing interference with normal operation of the electronic device, while still ensuring appropriate protection. Additionally, complex electronic devices like a CPU or a GPU can be monitored and controlled by the proposed method without need for an external module.

In some embodiments, the method may further include interrupting the current supply to the electronic device if the input current exceeds the current threshold.

In some embodiments, setting the current threshold may be further based on pre-recorded values of the input current and associated operation states of the electronic device. Thereby, dynamic adaptation of the current threshold can be performed in accordance with specific properties of the electronic device to be protected.

In some embodiments, setting the current threshold may be further based on a calibration factor determined during start-up of the electronic device.

Accordingly, changes in the baseline input current during startup due to aging or other factors can be determined. Further, the current thresholds can be adapted appropriately. In other words, a change in current consumption (and therefore, maximum input current) of the electronic device as result of ageing of the electronic device can be accounted for.

In some embodiments, setting the current threshold may be further based on an expected future operation state of the electronic device. Thereby, changes in operation state of the electronic device can be anticipated, allowing for example to avoid accidental shut-down of the device when the electronic device enters an operation mode with higher current consumption. On the other hand, when the electronic device enters an operation mode with lower current consumption, SEL protection can take effect earlier.

In some embodiments, the method may further comprise temporarily disabling protection of the electronic device from damage due to an SEL prior to an expected change of operation state of the electronic device.

Accordingly unnecessary cycling of power of the electronic device can be avoided and interference with normal operation of the electronic device is reduced.

In some embodiments, the method may further comprise performing a calibration process of cycling through different operation states and recording associated input currents in relation to the operation states.

Accordingly, the electronic device can dynamically define its own current limits, potentially accounting for ageing and other changes of the electronic device over time, and/or for specific properties of the electronic device.

In some embodiments, protection of the electronic device during the calibration process may be disabled.

In some embodiments, the method may further comprise using the values of the input current recorded during the calibration process as the pre-recorded values.

In some embodiments, the method may further comprise determining characteristics of the input current. The characteristics of the input current to the electronic device may relate to at least one of a value, a slope, and a curvature of the input current. Setting the current threshold may be further based on the characteristics of the input current.

In some embodiments, setting the current threshold may involve updating a look-up table with the input current averaged over time. The look-up table or an initial version thereof may be based on the pre-recorded values of the input current and associated operation states of the electronic device.

Accordingly, the current thresholds, as derivable from the look-up table, can be adapted dynamically over time. Therefore, the current thresholds are adapted according to internal factors influencing the power consumption of the electronic device over time, such as aging of components. Machine-learning algorithms may be used to improve the performance of the dynamic updates of the current thresholds according to the measured input current.

Another aspect of the disclosure relates to a system for protecting an electronic device from damage due to a Single Event Latch-Up, SEL. The electronic device may be one of a processor, a microcontroller, a memory, an FPGA, a graphics board, and a system thereof, for example. The system may include a determination module. The determination module may be configured to determine an operation state of the electronic device. The operation state may relate to one of a boot operation mode, an idle operation mode, a low-performance mode, and a high-performance mode, for example. The system may further include a sensing module. The sensing module may be configured to sense an input current to the electronic device. The system may further include a current threshold setting module. The threshold setting module may be configured to set a current threshold based on the determined operation state of the electronic device. The current threshold may be a threshold for detecting the SEL in the electronic device. The system may further include a comparing module (e.g., comparator). The comparing module may be configured to compare the sensed input current to the current threshold, for determining whether to interrupt current supply to the electronic device.

In some embodiments, the threshold setting module may be integrated with the electronic device. Accordingly, the electronic device can determine a threshold for detecting an SEL without an external module.

In some embodiments, the system may further include a current interrupt module (e.g., controllable switch). The current interrupt module may be configured to interrupt the current supply to the electronic device if the input current exceeds the current threshold.

In some embodiments, the current threshold setting module may be further configured to set the current threshold based on pre-recorded values of the input current and associated operation states of the electronic device. Additionally or alternatively, the current threshold setting module may be configured to set the current threshold based on a calibration factor determined during start-up of the electronic device. Additionally or alternatively, the current threshold setting module may be configured to set the current threshold based on a calibration factor determined during start-up of the electronic device.

In some embodiments, the system may further include a current analyzing module. The current analyzing module may be configured to determine characteristics of the input current. Additionally, the current threshold setting module may be configured to set the current threshold based on the characteristics of the input current. The characteristics of the input current to the electronic device may relate to at least one of a value, a slope, and a curvature of the input current.

In some embodiments, the current threshold setting module may be further configured to update a look-up table with the input current averaged over time for performing the setting of the current threshold. The look-up table may be based on the pre-recorded values of the input current and associated operation states of the electronic device.

Another aspect of the disclosure relates to an apparatus for setting a current threshold for use in protecting an electronic device from damage due to a Single Latch-Up Event, SEL. The electronic device may be one of a processor, a microcontroller, a memory, an FPGA, a graphics board, and a system thereof, for example. The apparatus may include a determination module. The determination module may be configured to determine an operation state of the electronic device. The operation state may relate to one of a boot operation mode, an idle operation mode, a low-performance mode, and a high-performance mode, for example. The apparatus may further include a current threshold setting module. The current threshold setting module may be configured to set a current threshold based on the determined operation state of the electronic device. The current threshold may be a threshold for detecting the SEL in the electronic device.

In some embodiments, the apparatus may be integrated with the electronic device.

In some embodiments, the current threshold setting module may be further configured to set the current threshold based on a calibration factor determined during start-up of the electronic device. Additionally or alternatively, the current threshold setting module may be configured to set the current threshold based on an expected future operation state of the electronic device.

### Brief Description of the Figures

Example embodiments of the disclosure are explained below with reference to the accompanying drawings, wherein
**Fig. 1** schematically illustrates an example of a system for protecting an electronic device from damage due to an SEL according to embodiments of the disclosure,
**Fig. 2** is a flowchart schematically illustrating an example of a method for protecting an electronic device from damage due to an SEL according to embodiments of the disclosure,
**Fig. 3** schematically illustrates an example of a method for calibrating the system of **Fig. 1** according to embodiments of the disclosure,
**Fig. 4** is a graph schematically illustrating an example of the setting of different thresholds depending on an operation state of the electronic device according to embodiments of the disclosure,
**Fig. 5** is a block diagram schematically illustrating an example of a system for protecting an electronic device from damage due to an SEL according to embodiments of the disclosure,
**Fig. 6** is a block diagram schematically illustrating an example of an apparatus for protecting an electronic device from damage due to an SEL according to embodiments of the disclosure, and
**Fig. 7** is a block diagram schematically illustrating another example of an apparatus for protecting an electronic device from damage due to an SEL according to embodiments of the disclosure.

### Detailed Description

In the following, example embodiments of the disclosure will be described with reference to the appended figures. Identical elements in the figures may be indicated by identical reference numbers, and repeated description thereof may be omitted.

In general, electronic devices that shall be protected from damage due to SEL may have different operation modes with different maximum input currents during these operation modes. To avoid interference with normal operation of the electronic device, a current threshold for SEL protection needs to be chosen sufficiently high above a highest possible input current (i.e., peak input current) of the electronic device. As a consequence, an SEL may not be detected when the electronic device operates in a low power mode, since only a single threshold above the peak input current during normal operation is used for detection.

A potential solution for the problem may be the utilization of multiple thresholds for different modes of the electronic device. Typically, these thresholds have to be set and tested in advance and/or monitored by an external device. An external device may increase the costs of the overall system. Moreover, the operation modes of the electronic device could change during the lifetime of the device for a number of reasons.

The present disclosure seeks to provide methods, systems, and apparatus for SEL protection that do not rely on external modules and that can dynamically adjust current thresholds for SEL protection.

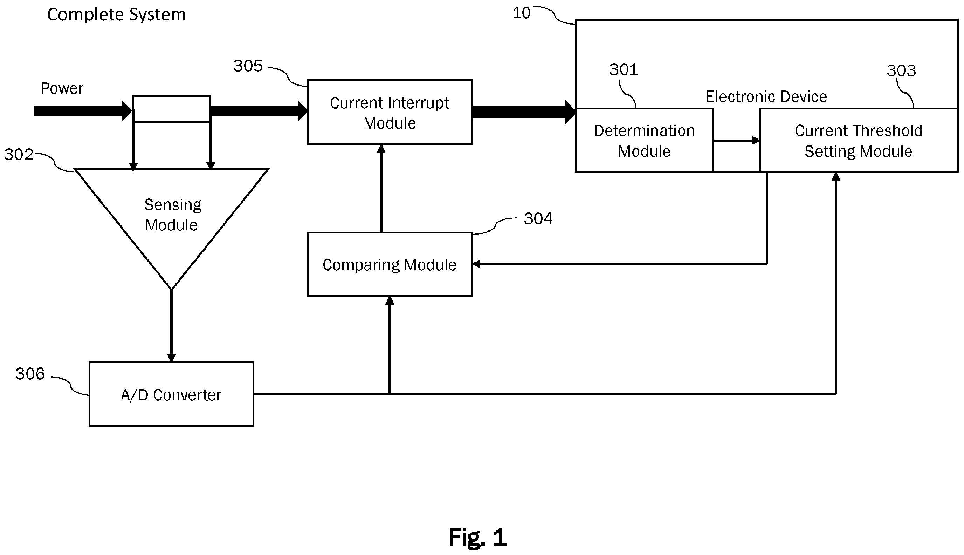

**Fig. 1** schematically illustrates an example of a system 300 for protecting an electronic device 10 from damage due to an SEL according to embodiments of the disclosure. The system may be suitable for use in a spacecraft, such as a satellite. The satellite may be a nanosatellite, such as a Cubesat, for example.

System 300 comprises a determination module 301. The determination module is configured to determine an operation state of the electronic device 10. The operation state may relate to one of a boot operation mode, an idle operation mode, a low-performance mode, and a high-performance mode, for example. Other operation modes are feasible depending on a type or kind of the electronic device. Each of the different operation modes may relate to a different CPU/GPU workload of the electronic device 10. Therefore, the electronic device 10 may draw more or less power (e.g., current) from a power source (e.g., current source), depending on the operation mode. The determination module may be integrated with (e.g., may be part of) the electronic device 10.

System 300 further comprises a sensing module 302. The sensing module is configured to sense an input current to the electronic device 10. The sensing module 302 may be any device capable of measuring the input current to the electronic device 10, such as a voltage measurement at a resistor or a magnetic field sensor, for example. Additionally, if necessary, the analog measurement result may be transformed to the digital domain by an A/D converter 306.

System 300 further comprises a current threshold setting module 303. The current threshold setting module 303 is configured to set a current threshold based on the operation state of the electronic device 10 that has been determined by the determination module 301. The current threshold is a threshold for detecting the SEL in the electronic device 10 (e.g., for interrupting current supply to the electronic device 10). Determination module 301 and current threshold setting module 303 may be integrated in the electronic device 10. Thereby, the electronic device can independently set current thresholds by analyzing its current settings without the need of an external module.

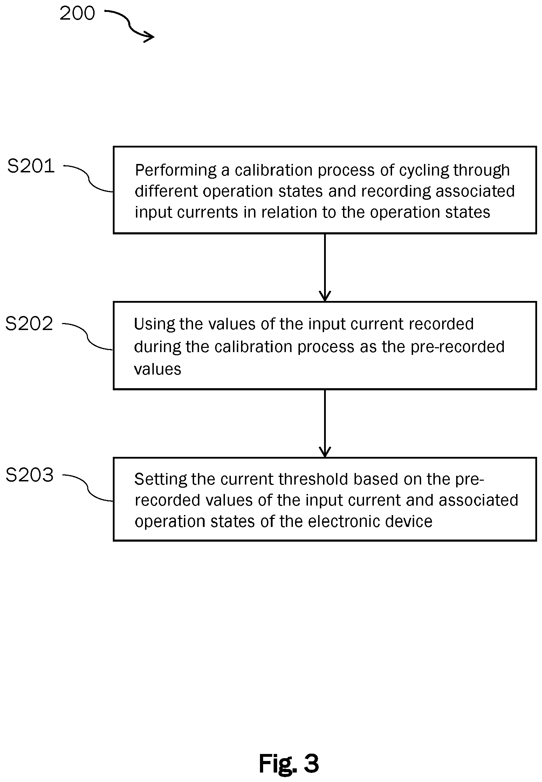

The setting of the current thresholds may be further based on pre-recorded values of the input current and associated operation states of the electronic device 10. The pre-recorded values may be associated to the operation states during a calibration process. For details, it is referred to **Fig. 3****.** For example, for a given operation state, the associated pre-recorded input current may be determined (e.g., read out), and the current threshold may be set based on said associated pre-recorded input current. In some implementations, the current threshold for the given operation state may be set to be e certain (e.g., predefined) margin (e.g., percentage or absolute offset) above said associated pre-recorded input current.

Additionally or alternatively, the current threshold may be based on a calibration factor determined during start-up of the electronic device 10. The calibration factor may be indicative of a change of the overall power consumption of the device over time. Therefore, the current threshold can be adapted to changes in power consumption of the electronic device 10 by analyzing a single factor. For instance, if an increase or decrease of current consumption by a certain factor (or ratio) is detected during calibration, current thresholds may be appropriately increased or decreased, respectively, based on the calibration factor. Alternatively, any pre-stored values of input currents associated with corresponding operation modes may be adjusted in accordance with the determined calibration factor.

Additionally or alternatively, the current threshold may be based on an expected future operation state of the electronic device. In particular, the determination module 301 may have additional data on upcoming tasks to be processed by the electronic device 10. Therefore, the determination module 301 may be able to predict or otherwise anticipate an upcoming change in the operation mode, and signal the threshold setting module 303 accordingly. If the upcoming operation mode is an operation mode associated with a higher power consumption, the current threshold may be changed in advance to avoid false detection of an SEL and interference with normal operation of the electronic device 10. Thereby, unnecessary shutdowns of the electronic device 10 can be avoided.

System 300 further comprises a comparing module (e.g., comparator) 304. The comparing module 304 is configured to compare the sensed input current to the current threshold, for determining whether to interrupt current supply to the electronic device 10. In other words, the comparing module 304 may receive the sensed input current (e.g., from the A/D converter), and the determined (e.g., set) current threshold from the current threshold setting module 302. If the sensed input current exceeds the determined current threshold, comparing module 304 may generate a control signal that indicates that the input current supply should be interrupted.

System 300 may further comprise a current interrupt module 305. The current interrupt module 305 may be configured to interrupt the current supply to the electronic device 10 if the input current exceeds the current threshold. For example, if comparing module 304 transmits a control signal indicating that the current threshold is exceeded and that the input current supply should be interrupted, interrupt module 305 may interrupt the input current supply to the electronic device 10. Thereby, damage to the electronic device due to an SEL can be avoided.

System 300 may further comprise a current analyzing module (not depicted in the example of **Fig. 1****).** The current analyzing module may be integrated with the current threshold setting module 302, for example. The current analyzing module may be configured to determine characteristics of the input current. The current threshold setting module 303 may be further configured to set the current threshold based on the characteristics of the input current. Alternatively, interrupting the input current supply may be additionally based on the determined characteristics of the input current. These characteristics may be understood as any characteristics of a current that would aid determination of whether the electronic device 10 experiences an SEL. Such characteristics may relate to at least one of a value, a slope, and a curvature of the input current. By utilizing characteristics of the input current, situations that would be falsely identified as an SEL can be avoided. For example, a short burst in the input current might trigger the cutting off of the input current supply, as the input current exceeds the current threshold. The short burst in the input current may, however, be unrelated to an SEL. Therefore, by providing highly detailed data of the input current to the current threshold setting module 302, a false cutting off of input current supply to the electronic device 10 can be avoided. In particular, in some implementations, the threshold setting module 302 may be able to quickly adapt the current threshold or set the current threshold to infinity for a short amount of time. Alternatively, as indicated above, the current interrupt module 305 may interrupt the input current further passed on the aforementioned characteristics of the input current.

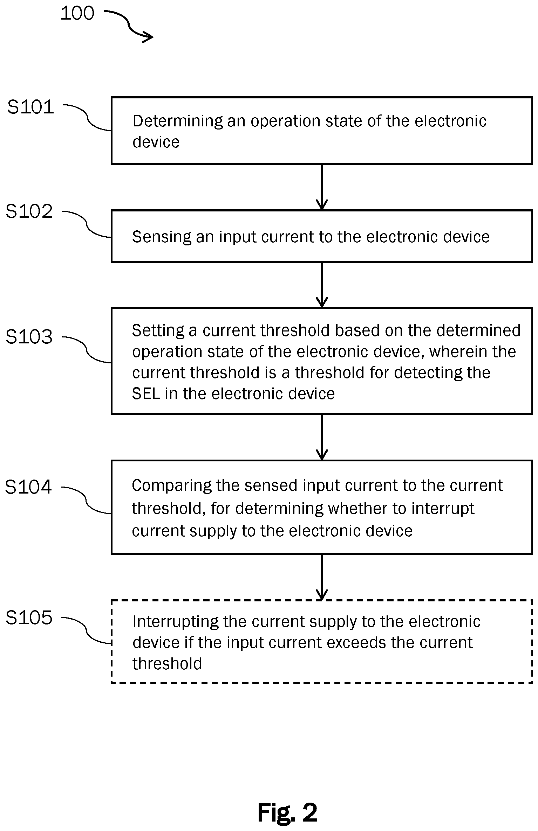

**Fig. 2** is a flowchart schematically illustrating an example of a method 100 for protecting an electronic device from damage due to an SEL according to embodiments of the disclosure. It should be noted that the steps of method 100 may correspond to the processing steps of the elements of system 300 described with reference to **Fig. 1****.** Details of the processing steps already described with reference to system 300 may not be explicitly described again. Further, any explanations provided above with regard to the modules of system 300 likewise apply to corresponding steps of method 100, and vice versa.

In step S101, an operation state of the electronic device is determined.

Further, in step S102, an input current to the electronic device 10 is sensed.

Further, in step S103, a current threshold is set based on the determined operation state. The current threshold is a threshold for detecting an SEL in the electronic device 10.

Further, in step S104, the input current is compared to the current threshold for determining whether to interrupt current supply to the electronic device 10.

Finally, in optional step S105, the input current supply to the electronic device 10 may be interrupted if the input current exceeds the current threshold.

**Fig. 3** schematically illustrates an example of a method 200 for calibrating the system of **Fig. 1****.**

In step S201, a calibration process of cycling through different operation states of the electronic device, and recording associated input currents in relation to the operation states is performed. More precisely, during the calibration process, the electronic device 10 may be initially cycled through the different operation modes that the electronic device may attain, and the maximum measured input currents in each operation mode may be used for determining the initial threshold values. In case previously set current thresholds exist, the protection of the electronic device 10 may be temporarily disabled during calibration. Disabling the protection of the electronic device 10 may be understood as involving any of disabling the previously set current thresholds, setting the current threshold initially to infinity, or disabling interruption of the input current supply.

In step S202, the current values recorded during the calibration process are used as the pre-recorded values.

Finally, in step S203, the current threshold is set based on the pre-recorded values of the input current and the associated operation states of the electronic device 10, in accordance with the determined, actual operation state of the electronic device. In doing so, the initial threshold values may be determined (e.g., set) by multiplying the maximum measured input current in a specific operation mode by a factor larger than 1 (e.g., to thereby provide for a certain margin). A look-up table may be generated with the determined current thresholds and respective linked operation modes.

After the calibration process, during operation of the electronic device 10, this look-up table may be continuously updated by analyzing the input current averaged over time during a specific operation state. More precisely, the averaged input current in a specific operation mode may be compared to the respective current threshold for that operation mode as recorded in the look-up table. If the averaged input current (possibly multiplied by the above specified factor larger than 1), is smaller or larger than the current threshold by a specific amount, the current threshold may be updated. Thereby, the current thresholds for the different operation modes can be adapted to take different external and internal factors into account, e.g., aging of electronic components, ambient temperature, and the like. Additionally, the setting of the associated current thresholds may be based on machine-learning algorithms to further improve the performance of the system. The dynamic updating of current thresholds over the lifetime of the electronic device 10 may be implemented through software, hardware, or a combination thereof.

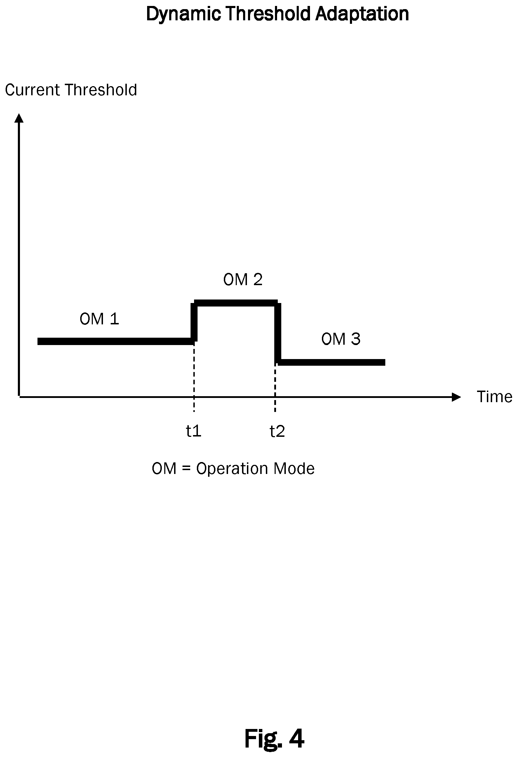

**Fig. 4** is a graph schematically illustrating an example for the setting of different thresholds depending on the operation state of the electronic device.

The graph shows current values (current threshold values) on the vertical axis and time on the horizontal axis. Initially the electronic device 10 may be in operation mode 1. The current threshold may be set based on the pre-recorded input current values and the associated operation mode (i.e., operation mode 1 in this case). Additionally, as already described above with reference to **Fig. 3****,** the current thresholds may me adapted over time by analyzing the input current over time, to thereby update the pre-recorded input current values.

At time t1 the operation state of the electronic device may change to operation mode 2. The current threshold may be adapted according to the pre-recorded input current values and the associated operation modes (i.e., operation mode 2 in this case). Additionally, it may be known in advance that operation mode 2 is switched to at time t1. In this case, the current threshold may be changed accordingly in advance, to reduce the risk of a false SEL detection.

Finally, at time t2, the operation state of the electronic device may be switched to operation mode 3. Accordingly, another change of the current threshold may be triggered.

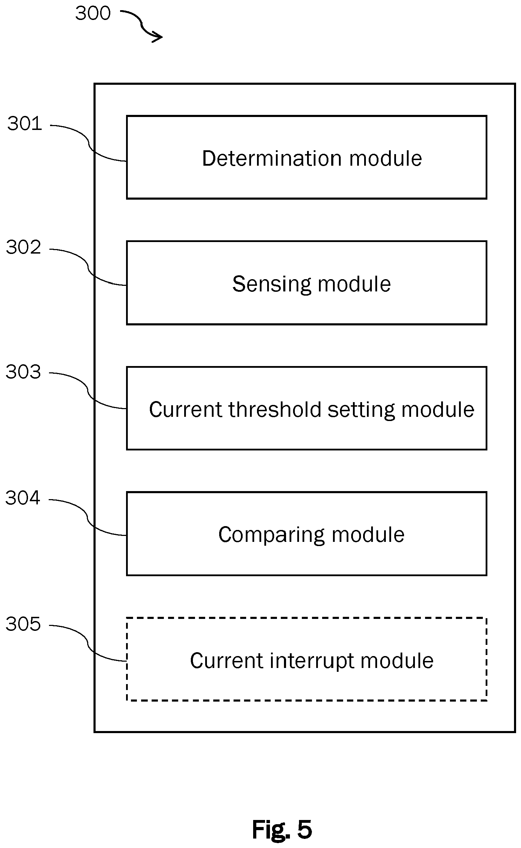

**Fig. 5** is a block diagram schematically illustrating an example of the system 300 for protecting an electronic device from damage due to an SEL according to embodiments of the disclosure. **Fig. 5** represents a block diagram of the system elements depicted in **Fig. 1****.** Accordingly, for a detailed description of the elements and the associated processes it is referred to **Fig. 1****.**

System 300 includes the determination module 301, configured to determine an operation state of the electronic device 10. System 300 further includes the sensing module 302, configured to sense an input current to the electronic device 10. System 300 further includes the current threshold setting module 303, configured to set a current threshold based on the determined operation state of the electronic device. The current threshold is a threshold for detecting the SEL in the electronic device 10. System 300 yet further includes the comparing module 304, configured to compare the sensed input current to the current threshold, for determining whether to interrupt current supply to the electronic device 10. System 300 may optionally include the current interrupt module 305, configured to interrupt the current supply to the electronic device 10 if the input current exceeds the current threshold.

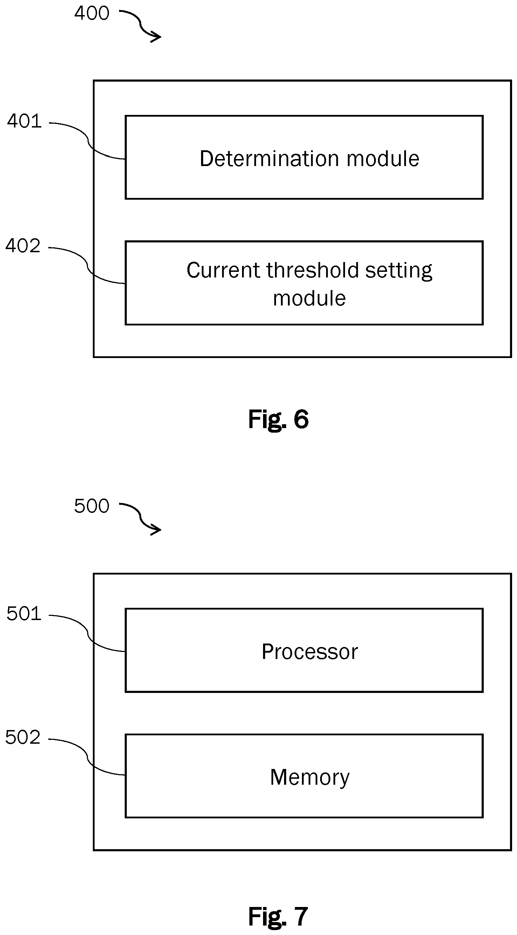

**Fig. 6** is a block diagram schematically illustrating an example of an apparatus 400 for protecting an electronic device from damage due to an SEL according to embodiments of the disclosure.

Apparatus 400 includes a determination module 401, configured to determine an operation state of the electronic device 10. Determination module 401 (or operation thereof) may be identical to determination module 301 described above.

Apparatus 400 further includes a current threshold setting module 402, configured to set a current threshold based on the determined operation state of the electronic device. The current threshold is a threshold for detecting the SEL in the electronic device 10. Current threshold setting module 402 (or operation thereof) may be identical to current threshold setting module 303 described above.

Apparatus 400 may be integrated in electronic device 10. Accordingly, the current threshold can be adapted without the need of an external module. For a detailed description of the elements of apparatus 400 it is referred to the corresponding elements of system 300 in **Fig. 1****.**

**Fig. 7** is a block diagram schematically illustrating an example of another apparatus 500 for protecting an electronic device from damage due to an SEL according to embodiments of the disclosure.

Apparatus 500 comprises a processor 501, or alternatively, a group of processors. The processor 501 or group of processors may calculate the threshold values for the pre-recorded operation modes of the current threshold setting module 402. The processor 501 may be a processor of the electronic device 10 or an additional processor solely for providing computing resources for threshold setting module 402 and determination module 401. It is understood that the processor 501 or group of processors may implement any of the modules described above and/or perform any of the method steps described above.

Apparatus 500 may further comprise memory 502 coupled to the processor 501. Memory 502 may store the pre-recorded input current values and the associated operation modes of the electronic device 10. Memory 502 may be a memory of electronic device 10 or an additionally memory solely for providing memory means for threshold setting module 402 and determination module 401.

It should be noted that the description and drawings merely illustrate the principles of the proposed technique for Latch-Up protection. Those skilled in the art will be able to implement various arrangements that, although not explicitly described or shown herein, embody the principles of the invention and are included within its spirit and scope. Furthermore, all examples and embodiment outlined in the present disclosure are principally intended expressly to be only for explanatory purposes to help the reader in understanding the principles of the proposed method and system. Furthermore, all statements herein providing principles, aspects, and embodiments of the invention, as well as specific examples thereof, are intended to encompass equivalents thereof.

## Claims

1. A method for protecting an electronic device from damage due to a Single Event Latch-Up, SEL, the method comprising:
determining an operation state of the electronic device;
sensing an input current to the electronic device;
setting a current threshold based on the determined operation state of the electronic device,
wherein the current threshold is a threshold for detecting the SEL in the electronic device; and
comparing the sensed input current to the current threshold, for determining whether to interrupt current supply to the electronic device.

2. The method of claim 1, further comprising:
interrupting the current supply to the electronic device if the input current exceeds the current threshold.

3. The method according to any one of the preceding claims, wherein
setting the current threshold is further based on pre-recorded values of the input current and associated operation states of the electronic device.

4. The method according to any one of the preceding claims, wherein
setting the current threshold is further based on a calibration factor determined during start-up of the electronic device.

5. The method according to any one of the preceding claims, wherein
setting the current threshold is further based on an expected future operation state of the electronic device.

6. The method according to any one of the preceding claims, further comprising:
temporarily disabling protection of the electronic device from damage due to an SEL prior to an expected change of operation state of the electronic device.

7. The method of any one of claims 3 to 6, further comprising:
performing a calibration process of cycling through different operation states and recording associated input currents in relation to the operation states.

8. The method of claim 7, further comprising:
disabling protection of the electronic device during the calibration process.

9. The method of claim 7 or 8 when depending on claim 3, further comprising:
using the values of the input current recorded during the calibration process as the pre-recorded values.

10. The method according to any one of the preceding claims, further comprising:
determining characteristics of the input current, wherein
setting the current threshold is further based on the characteristics of the input current.

11. The method of claim 3 or any one of claims 4 to 10 when depending on claim 3, wherein setting the current threshold involves updating a look-up table with the input current averaged over time, wherein the look-up table is based on the pre-recorded values of the input current and associated operation states of the electronic device.

12. A system for protecting an electronic device from damage due to a Single Event Latch-Up, SEL, the system comprising:
a determination module configured to determine an operation state of the electronic device;
a sensing module configured to sense an input current to the electronic device;
a current threshold setting module configured to set a current threshold based on the determined operation state of the electronic device, wherein the current threshold is a threshold for detecting the SEL in the electronic device; and
a comparing module configured to compare the sensed input current to the current threshold, for determining whether to interrupt current supply to the electronic device.

13. The system according to claim 12, wherein the threshold setting module and the determination module are integrated with the electronic device.

14. An apparatus for setting a current threshold for use in protecting an electronic device from damage due to a Single Event Latch-Up, SEL, the apparatus comprising:
a determination module configured to determine an operation state of the electronic device; and
a current threshold setting module configured to set a current threshold based on the determined operation state of the electronic device, wherein the current threshold is a threshold for detecting the SEL in the electronic device.

15. The apparatus according to claim 14, wherein the apparatus is integrated with the electronic device.
